# EUROPEAN PATENT APPLICATION

(11) **EP 3 352 264 A1**
(43) Date of publication of application: **25.07.2018**
(21) Application number: 16846086.3
(22) Date of filing: 13.07.2016
(51) Int. Cl.: H01M 4/583, H01G 11/06, H01G 11/42, H01G 11/52, H01G 11/60, H01G 11/62, H01M 2/16, H01M 4/36, H01M 4/485, H01M 4/62, H01M 10/052, H01M 10/0568, H01M 10/0569

(54) **NONAQUEOUS ELECTROLYTE SOLUTION ELECTRICITY STORAGE ELEMENT**

(30) Priority: 16.09.2015 JP 2015183336
(71) Applicant: Ricoh Company, Ltd., Tokyo 143-8555 (JP)
(72) Inventor: ARAKI, Yuka, Tokyo 143-8555 (JP); ABE, Naoto, Tokyo 143-8555 (JP); ITOH, Yoshio, Tokyo 143-8555 (JP); DAN, Tatsuya, Tokyo 143-8555 (JP); TAKESHITA, Shuhei, Tokyo 143-8555 (JP)
(74) Representative: Schwabe - Sandmair - Marx
(86) International application number: PCT/JP2016/070645
(87) International publication number: WO 2017/047213

(57) **Abstract**

A non-aqueous electrolyte storage element has a positive electrode including a positive electrode active material allowing intercalation or deintercalation of anions, a negative electrode including a negative electrode active material, a non-aqueous electrolytic solution, and a separator disposed between the positive electrode and the negative electrode to hold the non-aqueous electrolytic solution. The positive electrode active material is carbon having pores of a three-dimensional network structure, and the carbon contains a carbonate salt. The carbon may contain the carbonate salt at least inside the three-dimensional network structure. The carbonate salt may be mixed into the carbon. At least a portion of a surface of the carbon may be covered with the carbonate salt.

## Description

### Field

The present invention relates to a non-aqueous electrolyte storage element.

### Background

As mobile devices are recently decreased in size and enhanced in performance, non-aqueous electrolyte storage elements having high energy density are improved in characteristic properties and widespread. A non-aqueous electrolyte storage element having higher capacity and excellent safety is developed and has been already mounted to electric vehicles and the like.

Under such circumstances, a so-called dual intercalation-type non-aqueous electrolyte storage element is expected to be practically realized as a storage element having high energy density and suitable for rapid charge and discharge.

This type of non-aqueous electrolyte storage element includes: a positive electrode containing a conductive macromolecule, a carbon material, and the like; a negative electrode such as carbon; a non-aqueous electrolytic solution obtained by dissolving lithium salt in a non-aqueous solvent; and a separator disposed between the positive electrode and the negative electrode.

During charge, anions and cations in the non-aqueous electrolytic solution are intercalated to the positive electrode and the negative electrode respectively. During discharge, the anions and cations intercalated into the positive electrode and the negative electrode are deintercalated into the electrolytic solution. In this manner, charge and discharge are performed.

However, the problem is that hydrofluoric acid is generated associated with charge and discharge, thereby deteriorating battery properties, similarly to conventional lithium ion secondary batteries.

In non-aqueous electrolyte storage elements, the problem to pay the most attention is contamination of the element with moisture. The cause of the deterioration of lithium secondary batteries is considered to be hydrofluoric acid attributable to the decomposition of an electrolyte contained in an electrolytic solution through a reaction with water.

When moisture exists in an element, it reacts with an electrolytic solution to generate hydrofluoric acid. Accordingly, a positive electrode active material and a battery constituent material are decomposed. Furthermore, a decomposition product is deposited on the surface of a negative electrode thereby to increase the resistance value of the electrode. As a result of such a reaction, reduction of battery capacity, decrease of cycle life, and the like are caused.

The deterioration of a battery can be prevented by preventing the contamination of an element with moisture. However, in the current situation, it is extremely difficult to completely eliminate contamination with moisture during the production, and some contamination with moisture cannot be avoided under the manufacturing method of non-aqueous electrolyte storage elements.

In Patent Literature 1, a carbonate salt is added to a separator and an electrolytic solution for the purpose of capturing (inactivating) hydrofluoric acid generated due to the existence of moisture.

### Summary

### Technical Problem

However, when a carbonate salt is added to a separator in the technique of Patent Literature 1, a considerable amount of the carbonate salt needs to be added to the separator in order to completely capture hydrofluoric acid. Therefore, there is a concern that pores of the separator may be blocked with the carbonate salt, thereby inhibiting the exchange of ions.

Another problem is that when a carbonate salt is added to an electrolytic solution, the amount of the carbonate salt is limited because the solubility of the carbonate salt to the electrolytic solution is extraordinarily low. Furthermore, a reaction between a carbonate salt and hydrofluoric acid causes generation of a reaction product having extraordinarily low solubility. Thus, there is a risk that the deposition of such a reaction product in the electrolytic solution may inhibit charge and discharge of a battery, thereby deteriorating battery properties.

As described above, it has been practically difficult to add a sufficient amount of a carbonate salt for capturing hydrofluoric acid, and there has been a problem caused by the deposition of the reaction product.

The present invention has been achieved in view of such a current situation. A main object of the present invention is to provide a non-aqueous electrolyte storage element which can favorably capture hydrofluoric acid and contribute to the suppression of reduction in battery capacity and the improvement of cycle life.

### Solution to Problem

According to an embodiment, provided is a non-aqueous electrolyte storage element including: a positive electrode including a positive electrode active material allowing intercalation or deintercalation of anions; a negative electrode including a negative electrode active material; a non-aqueous electrolytic solution; and a separator disposed between the positive electrode and the negative electrode to hold the non-aqueous electrolytic solution, wherein the positive electrode active material is carbon having pores of a three-dimensional network structure, and the carbon contains a carbonate salt.

### Advantageous Effects of Invention

According to the present invention, there can be provided a non-aqueous electrolyte storage element which can favorably capture hydrofluoric acid and contribute to the suppression of reduction in battery capacity and the improvement of cycle life.

### Brief Description of Drawings

FIG. 1 is a schematic cross-sectional view of a non-aqueous electrolyte storage element according to an embodiment of the present invention.
FIG. 2 is a schematic view illustrating a basic configuration of a three-dimensional network structure in a non-aqueous electrolyte storage element.
FIG. 3 is a schematic cross-sectional view of a three-dimensional network structure in a state of containing no carbonate salt.
FIG. 4 is a schematic cross-sectional view of a three-dimensional network structure in a state of containing a carbonate salt.

### Description of Embodiments

An embodiment of the present invention will be described with reference to the drawings.

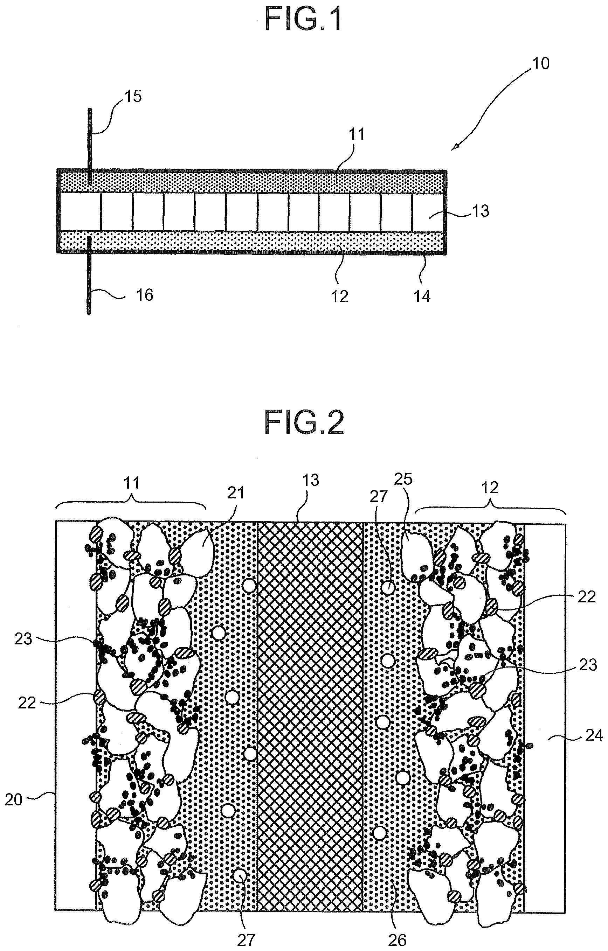

On the basis of FIG. 1, a configuration of a non-aqueous electrolyte storage element 10 will be schematically described. The non-aqueous electrolyte storage element 10 includes a positive electrode 11, a negative electrode 12, a separator 13 holding a non-aqueous electrolytic solution, a battery outer can 14, a positive electrode lead wire 15, a negative electrode lead wire 16, and other members as necessary.

Specific examples of the non-aqueous electrolyte storage element 10 may include a non-aqueous electrolyte secondary battery and a non-aqueous electrolyte capacitor.

FIG. 2 is a schematic view for describing a basic configuration of the non-aqueous electrolyte storage element 10 in an easy-to-understand manner.

The positive electrode 11 includes, for example, an aluminum positive electrode current collector 20, carbon 21 as a positive electrode active material having a three-dimensional network structure fixed onto the positive electrode current collector 20, a binder 22 which connects pieces of the carbon 21 together, and a conductive auxiliary 23, indicated by black circles, which imparts a conductive path among the pieces of the carbon 21.

The negative electrode 12 includes, for example, a copper negative electrode current collector 24, a negative electrode active material 25 containing a carbonaceous material and the like fixed onto the negative electrode current collector 24, the binder 22 which connects pieces of the negative electrode active material 25 together, and the conductive auxiliary 23, indicated by black circles, which imparts a conductive path among the pieces of the negative electrode active material 25.

The separator 13 and a non-aqueous electrolytic solution 26 are disposed between the positive electrode 11 and the negative electrode 12. A reference numeral 27 indicates ions. Ions are intercalated and deintercalated between carbon layers for charge and discharge.

A charge and discharge reaction of a dual intercalation-type non-aqueous electrolyte storage element is performed as follows. For example, when LiPF₆ is used as an electrolyte, charge is performed when PF₆⁻ is intercalated from a non-aqueous electrolytic solution to a positive electrode, and Li⁺ is intercalated into a negative electrode as indicated in the following reaction formula. Also, discharge is performed when PF₆⁻ and Li⁺ are deintercalated from a positive electrode and a negative electrode into a non-aqueous electrolytic solution, respectively.

Positive electrode: 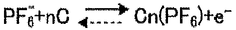
Negative electrode: 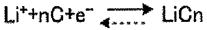
   → Charge reaction
   <----- Discharge reaction

Hereinafter, the non-aqueous electrolyte storage element 10 according to this embodiment will be described in detail for each of constituent members.

### [1. Positive Electrode]

The positive electrode 11 is not particularly limited as long as it contains a positive electrode storage material (a positive electrode active material and the like), and can be appropriately selected depending on its intended use. An example thereof may include a positive electrode including a positive electrode material having a positive electrode active material on a positive electrode current collector.

The shape of the positive electrode 11 is not particularly limited, and can be appropriately selected depending on its intended use. An example thereof may include a flat plate-like shape.

### [1-1. Positive Electrode Material]

The positive electrode material is not particularly limited, and can be appropriately selected depending on its intended use. For example, the positive electrode material contains at least a positive electrode active material, and further contains, as necessary, a conductive auxiliary, a binder, a thickening agent, a carbonate salt, and the like.

### [1-1-1. Positive Electrode Active Material]

The positive electrode active material is not particularly limited as long as anions can be intercalated or deintercalated, and can be appropriately selected depending on its intended use. An example thereof may include a carbonaceous material. In particular, the carbonaceous material is particularly preferable in terms of having high energy density.

Examples of the carbonaceous material may include coke, graphite such as artificial graphite and natural graphite, and a pyrolysate of organic matter under various pyrolysis conditions. Among these, porous carbon is particularly preferable. The porous carbon specifically has communicating pores (mesopores) having a three-dimensional network structure which enables suppression of expansion and contraction of the cross section of an electrode during intercalation or deintercalation of anions.

The three-dimensional network structure allows smooth movement of ions and expands a surface area thereof. Therefore, rapid charge and discharge properties can be improved.

The porous carbon according to the present invention has communicating pores having a three-dimensional network structure, which is distinguished from non-communicating porous carbon such as activated carbon. This is based on the fact that the porous carbon having non-communicating pores has low battery capacity.

Also, the three-dimensional network structure in the present invention does not mean that all pores are communicating, and is a concept including a structure in which the majority of pores are communicating.

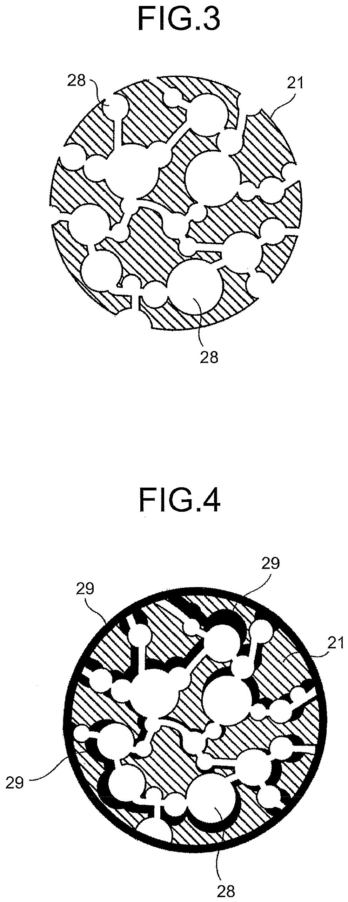

FIG. 3 schematically illustrates the cross-sectional structure of the carbon 21 having the three-dimensional network structure. The carbon 21 contains communicating mesopores 28 of the three-dimensional network structure.

The communicating pores of the three-dimensional network structure are not limited to mesopores. In other words, the size of the communicating pores is not limited as long as it allows electrolyte ions to smoothly move.

The positive electrode active material having communicating mesopores of the three-dimensional network structure is a capacitor in which a pair of positive and negative electrolyte ions exists along both sides of a surface at which the mesopore (cavity portion) and the carbon material portion are contact with each other thereby to form an electric charge double layer.

Therefore, it is understood that the movement of the pair of electrolyte ions is faster than the next movement of electrolyte ions generated after a sequential chemical reaction with the positive electrode active material, and that electric power supply ability is dependent on not only the size in volume of the cavity portion but also the size in surface area of the mesopore where the pair of positive and negative electrolyte ions exists.

The mesopores desirably have the three-dimensional network structure. If pores have the three-dimensional network structure, ions smoothly move.

The mesopores need to be an open pore, and have a configuration in which a pore portion is continuous. With such a configuration, ions smoothly move.

The carbonaceous material is preferably in the form of powder or particles. Also, the carbonaceous material may be surface-modified with fluorine or the like.

### [1-1-2. Binder and Thickening Agent]

The binder and the thickening agent are not particularly limited as long as they are stable with respect to a solvent and an electrolytic solution to be used for manufacturing an electrode and with respect to the applied potential, and can be appropriately selected depending on its intended use.

Examples thereof may include a fluorine-based binder such as polyvinylidene fluoride (PVDF) and polytetrafluoroethylene (PTFE), ethylene-propylene-butadiene rubber (EPBR), styrene-butadiene rubber (SBR), isoprene rubber, acrylate-based latex, carboxymethyl cellulose (CMC), methyl cellulose, hydroxymethyl cellulose, ethyl cellulose, polyacrylic acid, polyvinyl alcohol, alginic acid, oxidized starch, phosphate starch, and casein.

The binder to be used may include one conductive macromolecule, or two or more conductive macromolecules in combination. Among these, a fluorine-based binder such as polyvinylidene fluoride (PVDF) and polytetrafluoroethylene (PTFE), acrylate-based latex, and carboxymethyl cellulose (CMC) are preferable.

### [1-1-3. Conductive Auxiliary]

Examples of the conductive auxiliary may include a metal material such as copper and aluminum, and a carbonaceous material such as carbon black, acetylene black, and carbon nanotube. One of these may be used alone, or two or more thereof may be used in combination.

### [1-1-4. Carbonate Salt]

The carbonate salt is preferably at least one alkali metal salt selected from the group consisting of lithium carbonate (Li₂CO₃), sodium carbonate (Na₂CO₃), and potassium carbonate (K₂CO₃). Also, calcium carbonate (CaCO₃) as an alkali earth metal salt is similarly preferable.

### [1-2. Positive Electrode Current Collector]

The material, shape, size, and structure of the positive electrode current collector are not particularly limited, and can be appropriately selected depending on its intended use.

The material of the positive electrode current collector is not particularly limited as long as it is formed with a conductive material and is stable with respect to the applied potential, and can be appropriately selected depending on its intended use.

Examples thereof may include stainless steel, nickel, aluminum, titanium, and tantalum. Among these, stainless steel and aluminum are particularly preferable.

The shape of the positive electrode current collector is not particularly limited, and can be appropriately selected depending on its intended use.

The size of the positive electrode current collector is not particularly limited as long as it is usable for the non-aqueous electrolyte storage element, and can be appropriately selected depending on its intended use.

### [1-3. Manufacturing Method of Positive Electrode]

The positive electrode can be manufactured by: adding, as necessary, a binder, a thickening agent, a conducting agent, a solvent, and the like to a positive electrode active material to obtain a positive electrode material in a slurry state; coating a positive electrode current collector with the positive electrode material; and drying the coat.

The solvent is not particularly limited, and can be appropriately selected depending on its intended use. Examples thereof may include an aqueous solvent and an organic solvent. Examples of an aqueous solvent may include water and alcohol. Examples of an organic solvent may include N-methyl-2-pyrrolidone (NMP) and toluene.

It is noted that the positive electrode active material can be subjected to roll forming as it is to obtain a sheet electrode, or can be subjected to compression molding to obtain a pellet electrode.

### [2. Negative Electrode]

The negative electrode 12 is not particularly limited as long as it contains a negative electrode active material, and can be appropriately selected depending on its intended use. An example thereof may include a negative electrode including a negative electrode material having a negative electrode active material on a negative electrode current collector.

The shape of the negative electrode is not particularly limited, and can be appropriately selected depending on its intended use. An example thereof may include a flat plate-like shape.

### [2-1. Negative Electrode Material]

The negative electrode material contains at least a negative electrode storage material (negative electrode active material and the like), and further contains, as necessary, a conductive auxiliary, a binder, a thickening agent, and the like. The negative electrode may also contain the above-described conductive macromolecules.

### [2-1-1. Negative Electrode Active Material]

The negative electrode active material is not particularly limited as long as it is at least based on a non-aqueous solvent and allows occlusion and release of lithium ions. Specific examples thereof may include: a carbonaceous material; metal oxide allowing intercalation or deintercalation of lithium, such as antimony tin oxide and silicon monoxide; metal capable of being alloyed with lithium, such as aluminum, tin, silicon, and zinc or metal alloys; a composite alloy compound of metal capable of being alloyed with lithium, an alloy containing the metal, and lithium; and lithium metal nitride such as lithium cobalt nitride.

One of these may be used alone, or two or more thereof may be used in combination. Among these, a carbonaceous material is particularly preferable in terms of safety and costs.

Examples of the carbonaceous material may include coke, graphite such as artificial graphite and natural graphite, and a pyrolysate of organic matter under various pyrolysis conditions. Among these, artificial graphite and natural graphite are particularly preferable.

### [2-1-2. Binder and Thickening Agent]

The binder and the thickening agent are not particularly limited as long as they are stable with respect to a solvent and an electrolytic solution to be used for manufacturing an electrode and with respect to the applied potential, and can be appropriately selected depending on its intended use.

Examples thereof may include a fluorine-based binder such as polyvinylidene fluoride (PVDF) and polytetrafluoroethylene (PTFE), ethylene-propylene-butadiene rubber (EPBR), styrene-butadiene rubber (SBR), isoprene rubber, acrylate-based latex, carboxymethyl cellulose (CMC), methyl cellulose, hydroxymethyl cellulose, ethyl cellulose, polyacrylic acid, polyvinyl alcohol, alginic acid, oxidized starch, phosphate starch, and casein.

One of these may be used alone, or two or more thereof may be used in combination. Among these, a fluorine-based binder such as polyvinylidene fluoride (PVDF) and polytetrafluoroethylene (PTFE), styrene-butadiene rubber (SBR), and carboxymethyl cellulose (CMC) are preferable.

### [2-1-3. Conductive Auxiliary]

Examples of the conductive auxiliary may include a metal material such as copper and aluminum, and a carbonaceous material such as carbon black, acetylene black, and carbon nanotube. One of these may be used alone, or two or more thereof may be used in combination.

### [2-2. Negative Electrode Current Collector]

The material, shape, size, and structure of the negative electrode current collector are not particularly limited, and can be appropriately selected depending on its intended use.

The material of the negative electrode current collector is not particularly limited as long as it is formed with a conductive material and is stable with respect to the applied potential, and can be appropriately selected depending on its intended use. Examples thereof may include stainless steel, nickel, aluminum, and copper. Among these, stainless steel, copper, and aluminum are particularly preferable.

The shape of the negative electrode current collector is not particularly limited, and can be appropriately selected depending on its intended use.

The size of the negative electrode current collector is not particularly limited as long as it is usable for the non-aqueous electrolyte storage element, and can be appropriately selected depending on its intended use.

### [2-3. Manufacturing Method of Negative Electrode]

The negative electrode can be manufactured by: adding, as necessary, the above-described binder, thickening agent, conducting agent, solvent, and the like to a negative electrode active material to obtain a negative electrode material in a slurry state; coating a negative electrode current collector with the negative electrode material; and drying the coat.

The solvent to be used can be a solvent similar to that used in the manufacturing method of the positive electrode.

Also, the negative electrode active material added with the binder, thickening agent, conducting agent, and the like can be subjected to roll forming as it is to obtain a sheet electrode, or can be subjected to compression molding to obtain a pellet electrode. Alternatively, a thin film of the negative electrode active material can be formed on a negative electrode current collector by a method such as vapor deposition, sputtering, and plating.

### [3. Non-Aqueous Electrolytic Solution]

The non-aqueous electrolytic solution is an electrolytic solution obtained by dissolving an electrolyte salt in a non-aqueous solvent.

### [3-1. Non-Aqueous Solvent]

The non-aqueous solvent is not particularly limited, and can be appropriately selected depending on its intended use. However, an aprotic organic solvent is suitable.

The aprotic organic solvent to be used is a carbonate-based organic solvent such as a chain carbonate and a cyclic carbonate, and preferably has low viscosity. Among these, a chain carbonate is preferable because the dissolving power of an electrolyte salt is high.

Examples of a chain carbonate may include dimethyl carbonate (DMC), diethyl carbonate (DEC), and ethyl methyl carbonate (EMC). Among these, dimethyl carbonate (DMC) is preferable.

The content of DMC is not particularly limited, and can be appropriately selected depending on its intended use. However, the content of DMC relative to the non-aqueous solvent is preferably 70 mass% or more, and more preferably 83 mass% or more.

With less than 70 mass% of DMC, the amount of a cyclic material having high permittivity increases, when the remaining solvent is a cyclic material having high permittivity (cyclic carbonate, cyclic ester, and the like). Accordingly, when a non-aqueous electrolytic solution having a high concentration of 3 M or more is produced, the viscosity becomes extremely high, possibly resulting in the impregnation of the non-aqueous electrolyte into an electrode and the failure in terms of ion diffusion.

Examples of a cyclic carbonate may include propylene carbonate (PC), ethylene carbonate (EC), butylene carbonate (BC), vinylene carbonate (VC), and fluoroethylene carbonate (FEC).

When a mixed solvent containing a combination of ethylene carbonate (EC) as the cyclic carbonate and dimethyl carbonate (DMC) as the chain carbonate is used, the mixing ratio between ethylene carbonate (EC) and dimethyl carbonate (DMC) is not particularly limited, and can be appropriately selected depending on its intended use.

As the non-aqueous solvent, an ester-based organic solvent such as a cyclic ester and a chain ester, an ether-based organic solvent such as a cyclic ether and a chain ether, and the like can be used as necessary.

Examples of a cyclic ester may include γ-butyrolactone (yBL), 2-methyl-γ-butyrolactone, acetyl-γ-butyrolactone, and γ-valerolactone.

Examples of a chain ester may include a propionic acid alkyl ester, a malonic acid dialkyl ester, an acetic acid alkyl ester (methyl acetate (MA), ethyl acetate, and the like), and a formic acid alkyl ester (methyl formate (MF), ethyl formate, and the like).

Examples of a cyclic ether may include tetrahydrofuran, alkyl tetrahydrofuran, alkoxy tetrahydrofuran, dialkoxy tetrahydrofuran, 1,3-dioxolane, alkyl-1,3-dioxolane, and 1,4-dioxolane.

Examples of a chain ether may include 1,2-dimethoxyethane (DME), diethyl ether, an ethylene glycol dialkyl ether, a diethylene glycol dialkyl ether, a triethylene glycol dialkyl ether, and a tetraethylene glycol dialkyl ether.

### [3-2. Electrolyte Salt]

As an electrolyte salt, a lithium salt is used. The lithium salt is not particularly limited as long as it dissolves in the non-aqueous solvent and exhibits high ion conductivity. Examples thereof may include lithium hexafluorophosphate (LiPF₆), lithium perchlorate (LiClO₄), lithium chloride (LiCl), lithium fluoroborate (LiBF₄), lithium arsenic hexafluoride (LiAsF₆), lithium trifluoromethanesulfonate (LiCF₃SO₃), lithium bistrifluoromethylsulfonyl imide (LiN(C₂F₅SO₂)₂), and lithium bisperfluoroethylsulfonyl imide (LiN(CF₂F₅SO₂)₂). One of these may be used alone, or two or more thereof may be used in combination. Among these, LiPF₆ or LiBF₄ is particularly preferable from the viewpoint of the occlusion amount of anions into a carbon electrode.

The concentration of the electrolyte salt is not particularly limited, and can be appropriately selected depending on its intended use. The concentration in the non-aqueous solvent is preferably 0.5 mol/L to 6 mol/L, and more preferably 2 mol/L to 4 mol/L in terms of achieving a balance between battery capacity and output.

### [4. Separator]

The separator 13 is disposed between a positive electrode and a negative electrode for preventing a short circuit between the positive electrode and the negative electrode. The material, shape, size, and structure of the separator are not particularly limited, and can be appropriately selected depending on its intended use.

Examples of the material of the separator may include paper such as kraft paper, vinylon mixed paper, and synthetic pulp mixed paper, cellophane, polyethylene grafted films, polyolefin nonwoven fabric such as polypropylene melt-blown nonwoven fabric, polyamide nonwoven fabric, glass fiber nonwoven fabric, and micropore films.

Among these, a material having a porosity of 50% or more is preferable from the viewpoint of holding an electrolytic solution.

The shape of the separator is preferably nonwoven fabric having high porosity, rather than a thin film having micropores. The thickness of the separator is preferably 20 µm or more for preventing a short circuit and holding an electrolytic solution.

The size of the separator is not particularly limited as long as it is usable for the non-aqueous electrolyte storage element, and can be appropriately selected depending on its intended use.

The structure of the separator may be a single-layer structure or a laminated structure.

A carbonate salt may be added to the separator. The carbonate salt to be added is preferably at least one alkali metal salt selected from the group consisting of lithium carbonate (Li₂CO₃), sodium carbonate (Na₂CO₃), and potassium carbonate (K₂CO₃). Also, calcium carbonate (CaCO₃) as an alkali earth metal salt is similarly preferable.

### [5. Manufacturing Method of Non-Aqueous Electrolyte Storage Element]

The non-aqueous electrolyte storage element according to the present invention is manufactured by assembling the positive electrode, the negative electrode, the non-aqueous electrolytic solution, and the separator to an appropriate shape. Furthermore, other constituent members such as a battery outer can also be used.

The method for assembling the non-aqueous electrolyte storage element is not particularly limited, and can be appropriately selected from usually adopted methods.

The shape of the non-aqueous electrolyte storage element according to the present invention is not particularly limited, and can be appropriately selected from commonly adopted various shapes depending on its intended use. Examples thereof may include: a cylinder type in which sheet electrodes and a separator are shaped into a spiral; a cylinder type having an inside-out structure in which pellet electrodes and a separator are combined to one another; and a coin type in which pellet electrodes and a separator are laminated with one another.

### [6. Intended Use]

The intended use of the non-aqueous electrolyte storage element according to the present invention is not particularly limited, and can be various.

Examples thereof may include notebook computers, pen input computers, mobile computers, electronic book players, cellular phone, portable fax machines, portable copy machines, portable printers, headphone stereos, video movie cameras, liquid crystal televisions, handy cleaners, portable CDs, MiniDiscs, transceivers, electronic organizers, calculators, memory cards, portable tape recorders, radios, backup power sources, motors, lighting fixtures, toys, game machines, clocks, flash lamps, and cameras.

### Examples

Although examples of the present invention will be described below, the present invention is not limited to these examples.

### (Example 1)

### <Carbonate Salt-containing Positive Electrode Active Material 1>

As a positive electrode active material, 10 g of porous carbon having pores of a three-dimensional network structure (CNovel manufactured by Toyo Tanso Co., Ltd.) was employed. To the porous carbon, 4 g of a 5.0% by weight aqueous solution containing Na₂CO₃ dissolved as a carbonate salt was added and mixed. Thereafter, the mixture was heated under reduced pressure at 120°C for 12 hours to obtain a positive electrode active material inside which the carbonate salt was contained.

Whether the carbonate salt was contained inside the positive electrode active material was confirmed by performing cross-section cutting of the obtained carbonate salt-containing positive electrode active material 1 using an ion milling system IM4000 (manufactured by Hitachi High-Technologies Corporation), and thereafter performing element mapping using a SEM and an EDS of SU8230 (manufactured by Hitachi High-Technologies Corporation).

It is noted that the BET specific surface area of the carbonate salt-containing positive electrode active material 1 was 1700 m²/g, and the pore volume was 2.1 mL/g. The BET specific surface area was calculated according to a BET method from the result of an adsorption isotherm by TriStar 3020 (manufactured by Shimadzu Corporation). The pore volume was calculated according to a BJH method.

The carbon having pores of a three-dimensional network structure desirably has a BET specific surface area of 50 to 2000 m²/g and a pore volume of 0.2 to 2.3 mL/g.

FIG. 4 schematically illustrates a cross-sectional structure of the carbonate salt-containing positive electrode active material 1. A reference numeral 29 indicates the carbonate salt. The carbonate salt 29 is contained inside and on the outer surface of the carbon 21 that serves as a positive electrode active material.

In the present embodiment, the carbonate salt is mixed during manufacture. However, after the formation of carbon having communicating pores of a three-dimensional network structure, the carbon may be immersed in a solution of the carbonate salt, and thereafter the solvent may be removed.

Alternatively, the carbonate salt may be applied onto the carbon of a three-dimensional network structure. In this case, at least a portion of the surface of the carbon may be covered with the carbonate salt.

### <Production of Positive Electrode>

As a positive electrode active material, the aforementioned carbonate salt-containing positive electrode active material 1 was used. The positive electrode active material, acetylene black (Denka Black powdery: Denki Kagaku Kogyo Kabushiki Kaisha) as a conductive auxiliary, carboxylmethyl cellulose (Daicel 2200: Daicel Chemical Industries, Ltd.) as a thickening agent, and acrylate-based latex (TRD202A: JSR) as a binder were mixed such that the ratio among the components in terms of % by weight based on solid contents was 85.0:6.2:6.3:2.5. To this mixture, water was added to adjust the viscosity of the mixture to an appropriate degree, thereby to obtain a slurry. The slurry was applied onto one surface of an aluminum foil having a thickness of 20 µm using a doctor blade.

The average of the basis weight after drying (the mass of carbon active material powder contained in the applied positive electrode) was 3 mg/cm². The resultant product was punched to obtain a circle having a diameter of 16 mm, thereby to produce a positive electrode.

### <Production of Negative Electrode>

As a negative electrode active material, artificial graphite (MAGD manufactured by Hitachi Chemical Co., Ltd.) was used. The negative electrode active material, acetylene black (Denka Black powdery: Denki Kagaku Kogyo Kabushiki Kaisha) as a conductive auxiliary, an SBR-based binder (EX1215: Denki Kagaku Kogyo Kabushiki Kaisha) as a binder, and carboxylmethyl cellulose (Daicel 2200: Daicel Chemical Industries, Ltd.) as a thickening agent were mixed such that the ratio among the components in terms of % by weight based on solid contents was 90.9:4.5:2.7:1.8. To this mixture, water was added to adjust the viscosity of the mixture to an appropriate degree, thereby to obtain a slurry. The slurry was applied onto one surface of a copper foil having a thickness of 18 µm using a doctor blade.

The average of the basis weight after drying (the mass of carbon active material powder contained in the applied positive electrode) was 10 mg/cm². The resultant product was punched to obtain a circle having a diameter of 16 mm, thereby to produce a negative electrode.

### <Separator>

Two sheets of glass filter paper (GA100: ADVANTEC) were each punched to obtain a circle having a diameter of 16 mm. These were used as a separator.

### <Non-Aqueous Electrolytic Solution>

As an electrolytic solution, a 2 mol/L dimethyl carbonate (DMC) solution of LiPF₆ (manufactured by Kishida Chemical Co., Ltd.) was used.

### <Production and Measurement of Battery>

The above-described positive electrode and separator were vacuum-dried at 150°C for 4 hours. Thereafter, a 2032-type coin cell was assembled in a dry argon glove box.

The produced storage element was held in a constant temperature bath at 25°C. In a charge and discharge test, an automatic battery evaluator 1024B-7V0.1A-4 (manufactured by Electro Field Co., Ltd.) was used.

A charge and discharge test was performed under the conditions of I to VIII as indicated in Table 1. In Table 1, the number of times on the right end is the number of tests performed.

A reference current value was set to be 0.5 mA. For II and VI, the current values of only discharge were set to be 5 times (5C) and 10 times (10C) the reference current value, respectively. The properties during rapid discharge were observed.

For IV and VIII, the current values of only charge were set to be 5 times (5C) and 10 times (10C) the reference current value, respectively. The properties during rapid charge were observed.

In I to VIII, charge was performed with a final voltage of 4.5 V and a constant current, and discharge was performed with a final voltage of 1.5 V. A pause of 5 minutes was provided between charge and discharge and between discharge and charge.

**Table 1**

| | | | | | |
|---|---|---|---|---|---|
| I | Charge | 0.5 mA | Discharge | 0.5 mA | Ten times |
| II | Charge | 0.5 mA | Discharge (Rapid) | 2.5 mA | Five times |
| III | Charge | 0.5 mA | Discharge | 0.5 mA | Twice |
| IV | Charge (Rapid) | 2.5 mA | Discharge | 0.5 mA | Five times |
| V | Charge | 0.5 mA | Discharge | 0.5 mA | Twice |
| VI | Charge | 0.5 mA | Discharge (Rapid) | 5.0 mA | Five times |
| VII | Charge | 0.5 mA | Discharge | 0.5 mA | Twice |
| VIII | Charge (Rapid) | 5.0 mA | Discharge | 0.5 mA | Five times |

### (Example 2)

### <Carbonate Salt-Containing Positive Electrode Active Material 2>

As a positive electrode active material, 10 g of porous carbon having pores of a three-dimensional network structure (CNovel manufactured by Toyo Tanso Co., Ltd.) was used. To the porous carbon, 4 g of a 1.3% by weight aqueous solution containing Li₂CO₃ dissolved as a carbonate salt was added and mixed. Thereafter, the mixture was heated under reduced pressure at 120°C for 12 hours to obtain a positive electrode active material inside which the carbonate salt was contained.

Whether the carbonate salt was contained inside the positive electrode active material was confirmed by performing cross-section cutting of the obtained carbonate salt-containing positive electrode active material 2 using an ion milling system IM4000 (manufactured by Hitachi High-Technologies Corporation), and thereafter performing element mapping using a SEM and an EDS of SU8230 (manufactured by Hitachi High-Technologies Corporation).

### <Production and Measurement of Battery>

Electrodes and a battery were produced and evaluated in a similar manner to those in Example 1, except that the aforementioned carbonate salt-containing positive electrode active material 2 as a positive electrode active material, a conductive auxiliary, a thickening agent, and a binder were mixed such that the ratio among the components in terms of % by weight based on solid contents was 84.8:6.3:6.4:2.5, and water was added to prepare a slurry.

### (Comparative Example 1)

Electrodes and a battery were produced and evaluated in a similar manner to those in Example 1, except that a porous carbon having pores of a three-dimensional network structure as a positive electrode active material, a conductive auxiliary, a thickening agent, and a binder were mixed such that the ratio among the components in terms of % by weight based on solid contents was 84.7:6.4:6.4:2.5, and water was added to prepare a slurry.

That is, in Comparative Example 1, the porous carbon having pores of a three-dimensional network structure does not contain any carbonate salt.

Table 2 indicates the discharge capacity at the tenth cycle with the reference current value (0.5 mA) of I, and the retention rate of the discharge capacity at the third cycle of II, IV, VI, and VIII relative to the discharge capacity at the tenth cycle of I.

**Table 2**

| | Type of carbonate salt | I (mAh/ g) | II (%) | IV (%) | VI (%) | VIII (%) |
|---|---|---|---|---|---|---|
| Example 1 | Na₂CO₃ | 95.8 | 99.2 | 92.5 | 90.5 | 87.1 |
| Example 2 | Li₂CO₃ | 96.2 | 99.3 | 93.8 | 91.2 | 88.7 |
| Comparative Example 1 | - | 100.5 | 90.4 | 75.7 | 62.2 | 20.2 |

As seen from the results in Table 2, the addition of the carbonate salt to the positive electrode of the three-dimensional network structure increases the capacity retention rate during rapid charge and discharge, compared to when a carbonate salt was not added (Comparative Example 1) .

It is considered that this is because the addition of the carbonate salt inside the positive electrode inhibited the liberation of hydrofluoric acid into the electrolytic solution and the deposition of the reaction product onto the negative electrode due to the liberation, thereby reducing the resistance of the electrode and enabling more efficient movement of electric charges.

It is noted that the reason why the value (mAh/g) of I is larger in Comparative Example 1 than in Examples 1 and 2 is considered to be a large surface area of carbon resulting from no coverage of the carbonate salt.

As described above, a positive electrode (carbon) contains water which is unavoidable in terms of a manufacturing method. In such a state, an electrolyte such as LiPF₆ reacts with water to generate hydrofluoric acid (HF) as indicated in the following formula (1):

LiPF₆ + H₂O → LiF·HF + HF + POF₃ (1).

The generated hydrofluoric acid decomposes the positive electrode active material and the battery constituent materials as described above. Furthermore, a decomposition product is deposited on the surface of the negative electrode thereby to increase the resistance value of the electrode. As a result of such a reaction, battery capacity and cycle life may decrease.

However, when the positive electrode contains a carbonate salt such as Na₂CO₃ or Li₂CO₃, the generated hydrofluoric acid (HF) reacts with the carbonate salt to become sodium fluoride (NaF) or the like, which is a stable compound, as indicated in the following formula (2):

Na₂CO₃ + 2HF → 2NaF + CO₂ + H₂O (2).

This inhibits a positive electrode active material and a battery constituent material from being decomposed by the generated hydrofluoric acid, and solves the problem that the decomposition product is deposited on the surface of a negative electrode.

The reaction product between the carbonate salt and hydrofluoric acid is physically held inside the three-dimensional network structure. Therefore, the problem that the reaction product is deposited in the electrolytic solution is also solved.

When a positive electrode includes porous carbon of a three-dimensional network structure, rapid charge and discharge properties can be improved. On the other hand, the generation amount of hydrofluoric acid also increases due to a surface area enlarged by the three-dimensional network structure.

However, when porous carbon contains a carbonate salt particularly inside the porous carbon, the above-described advantage attributable to the three-dimensional network structure can be sufficiently exploited while suppressing a failure attributable to the generation of hydrofluoric acid.

It is noted that although Patent Literature 1 discloses adding a carbonate salt to a positive electrode, an object thereof is to generate a carbon dioxide gas by decomposing the carbonate salt through heating or the like after the assembling of a battery. That is, the concentration of the carbon dioxide gas inside the battery is increased without decomposing the electrolytic solution. Thus, the capture of hydrofluoric acid is not intended.

### (Example 3)

### <Production of Battery>

A battery was produced in a similar manner to that in Example 1.

### <Measurement of Battery>

The produced storage element was held in a constant temperature bath at 25°C, and subjected to a charge and discharge test under the following conditions. For the charge and discharge test, an automatic battery evaluator 1024B-7V0.1A-4 (manufactured by Electro Field Co., Ltd.) was used. Charge was performed with the reference current value of 0.5 mA to a charge final voltage of 4.5 V.

After the first cycle of charge, discharge was performed to 1.5 V. A pause of 5 minutes was provided between charge and discharge and between discharge and charge. This charge and discharge was repeated.

Also, in all cycles, charge was performed with a final voltage of 4.5 V and a constant current, and discharge was performed with a final voltage of 1.5 V. A pause of 5 minutes was provided between charge and discharge. This charge and discharge was repeated until the capacity was reduced by 20% or more relative to the discharge capacity at the first cycle when the current value was set five times the reference current value.

### (Example 4)

### <Production of Battery>

A battery was produced in a similar manner to that in Example 2 and evaluated in a similar method to that in Example 3.

### (Example 5)

### <Carbonate Salt-Containing Separator 1>

Two sheets of glass filter paper (GA100: ADVANTEC) were each punched to obtain a circle having a diameter of 16 mm. These were used as a separator. The separator was immersed in a 5.0% by weight aqueous solution in which Na₂CO₃ as a carbonate salt was dissolved. Thereafter, the resultant product was heated under reduced pressure at 150°C for 4 hours to obtain a positive electrode active material inside which the carbonate salt was contained.

### <Production and Measurement of Battery>

The aforementioned carbonate salt-containing separator 1 was used as the separator. The electrode produced in Example 1 was used as the positive electrode, and the electrode produced in Example 1 was used as the negative electrode. A battery was produced and evaluated in a similar manner to those in Example 3 except for these conditions.

### (Example 6)

### <Carbonate Salt-Containing Separator 2>

Two sheets of glass filter paper (GA100: ADVANTEC) were each punched to obtain a circle having a diameter of 16 mm. These were used as a separator. The separator was immersed in a 1.3% by weight aqueous solution in which Li₂CO₃ as a carbonate salt was dissolved. Thereafter, the resultant product was heated under reduced pressure at 150°C for 4 hours to obtain a positive electrode active material inside which the carbonate salt was contained.

### <Production and Measurement of Battery>

The aforementioned carbonate salt-containing separator 2 was used as the separator. The electrode produced in Example 1 was used as the positive electrode, and the electrode produced in Example 1 was used as the negative electrode. A battery was produced and evaluated in a similar manner to those in Example 3 except for these conditions.

### (Example 7)

### <Production and Measurement of Battery>

A battery was produced and evaluated in a similar manner to those in Example 3 except that the electrode produced in Comparative Example 1 was used as the positive electrode, the electrode produced in Example 1 was used as the negative electrode, and the carbonate salt-containing separator 1 produced in Example 5 was used as the separator.

### (Example 8)

### <Production and Measurement of Battery>

A battery was produced and evaluated in a similar manner to those in Example 3 except that the positive and negative electrodes produced in Example 1 were used, and a 2 mol/L dimethyl carbonate (DMC) solution of LiBF₄ (manufactured by Kishida Chemical Co., Ltd.) was used as the electrolytic solution.

### (Example 9)

### <Production and Measurement of Battery>

A battery was produced and evaluated in a similar manner to those in Example 3 except that the positive and negative electrodes produced in Example 1 were used, and a 2 mol/L propyl carbonate (PC) / ethyl methyl carbonate (EMC) solution (weight ratio PC/EMC = 1/1) of LiBF₄ (manufactured by Kishida Chemical Co., Ltd.) was used as the electrolytic solution.

### (Example 10)

### <Production of Negative Electrode>

Lithium titanate (Li₄Ti₅O₁₂ manufactured by Ishihara Sangyo Kaisha, LTD.) as a negative electrode active material, acetylene black (Denka Black powdery manufactured by Denki Kagaku Kogyo Kabushiki Kaisha) as a conductive auxiliary, a styrene-butadiene rubber (TRD102A manufactured by JSR Corporation) as a binder, and carboxylmethyl cellulose (Daicel 2200 manufactured by Daicel Chemical Industries, Ltd.) as a thickening agent were mixed such that the ratio among the components in terms of mass ratio based on solid contents was 100:7:3:1. To this mixture, water was added to adjust the viscosity of the mixture to an appropriate degree, thereby to obtain a slurry. The slurry was applied onto one surface of an aluminum foil having a thickness of 18 µm using a doctor blade.

The average of the basis weight after drying was 3.0 mg/cm². In this manner, a negative electrode was produced.

### <Production of Battery>

A battery was produced in a similar manner to that in Example 3 except that the positive electrode produced in Example 1 and the aforementioned negative electrode were used.

### <Measurement of Battery>

The produced storage element was held in a constant temperature bath at 25°C, and subjected to a charge and discharge test under the following conditions. For the charge and discharge test, an automatic battery evaluator 1024B-7V0.1A-4 (manufactured by Electro Field Co., Ltd.) was used.

Charge was performed with the reference current value of 0.5 mA to a charge final voltage of 3.7 V. After the first cycle of charge, discharge was performed to 1.5 V. This is because the action potential of lithium titanate is 1.5 V (vs Li/Li⁺).

This charge and discharge was repeated while providing a pause of 5 minutes between charge and discharge and between discharge and charge. Also, in all cycles, charge was performed with a final voltage of 3.7 V and a constant current, and discharge was performed with a final voltage of 1.5 V. A pause of 5 minutes was provided between charge and discharge.

This charge and discharge was repeated until the capacity was reduced by 20% or more relative to the discharge capacity at the first cycle when the current value was set five times the reference current value.

### (Comparative Example 2)

A battery was produced and evaluated in a similar manner to those in Example 3 except that the electrode produced in Comparative Example 1 was used as the positive electrode, and the electrode produced in Example 1 was used as the negative electrode.

### (Comparative Example 3)

A battery was produced and evaluated in a similar manner to those in Example 3 except that the electrode produced in Comparative Example 1 was used as the positive electrode, the electrode produced in Example 1 was used as the negative electrode, and a 2 mol/L dimethyl carbonate (DMC) solution of LiBF₄ (manufactured by Kishida Chemical Co., Ltd.) was used as the electrolytic solution.

### (Comparative Example 4)

A battery was produced and evaluated in a similar manner to those in Example 3 except that the electrode produced in Comparative Example 1 was used as the positive electrode, the electrode produced in Example 1 was used as the negative electrode, and a 2 mol/L propyl carbonate (PC) / ethyl methyl carbonate (EMC) solution (weight ratio PC/EMC = 1/1) of LiBF₄ (manufactured by Kishida Chemical Co., Ltd.) was used as the electrolytic solution.

### (Comparative Example 5)

A battery was produced in a similar manner to that in Example 3 and evaluated in a similar manner to that in Example 10 except that the electrode produced in Comparative Example 1 was used as the positive electrode, and the electrode produced in Example 9 was used as the negative electrode.

Table 3 indicates the discharge capacity at the tenth cycle, and the number of cycles at which the discharge capacity retention rate became 80% or less when the discharge capacity at the first cycle was assumed to be 100%.

**Table 3**

| | Type of carbonate salt | Addition to positive electrode | Addition to separator | Negative electrode | Electrolytic solution | Discharge capacity at tenth cycle (mAh/g) | Cycle life (Number of cycles) |
|---|---|---|---|---|---|---|---|
| Example 3 | Na₂CO₃ | Added | Not added | Carbon | 2MLiPF₆ [DMC] | 89.1 | 724 |
| Example 4 | Li₂CO₃ | Added | Not added | Carbon | 2MLiPF₆ [DMC] | 90.6 | 788 |
| Example 5 | Na₂CO₃ | Added | Added | Carbon | 2MLiPF₆ [DMC] | 88.1 | 891 |
| Example 6 | Li₂CO₃ | Added | Added | Carbon | 2MLiPF₆ [DMC] | 89.7 | 930 |
| Example 7 | Na₂CO₃ | Not added | Added | Carbon | 2MLiPF₆ [DMC] | 89.7 | 698 |
| Example 8 | Na₂CO₃ | Added | Not added | Carbon | 2MLiBF₄ [DMC] | 88.2 | 803 |
| Example 9 | Na₂CO₃ | Added | Not added | Carbon | 2MLiBF₄ [PC/DMC] | 99.3 | 1023 |
| Example 10 | Na₂CO₃ | Added | Not added | LTO | 2MLiPF₆ [DMC] | 83.5 | 682 |
| Comparative Example 2 | - | Not added | Not added | Carbon | 2MLiPF₆[DMC] | 88.4 | 237 |
| Comparative Example 3 | - | Not added | Not added | Carbon | 2MLiBF₄ [DMC] | 85.3 | 268 |
| Comparative Example 4 | - | Not added | Not added | Carbon | 2MLiBF₄ [PC/DMC] | 90.7 | 284 |
| Comparative Example 5 | - | Not added | Not added | LTO | 2MLiPF₆ [DMC] | 82.7 | 218 |

As seen from the results in Table 3, the cycle life of Examples 3 and 4, in which the carbonate salt was added to only the positive electrode, is as much as three times that of Comparative Example 2, in which any carbonate salt was not added to both the positive electrode and the separator.

It is considered that this is because the carbonate salt added to the positive electrode reacted with generated hydrofluoric acid, thereby inhibiting the deterioration of the battery materials and the deposition of a high-resistance material to the negative electrode.

Furthermore, the cycle life of Examples 5 and 6, in which the carbonate salt was also added to the separator, is as much as four times that of Comparative Example 2.

It is considered that this is because the remaining hydrofluoric acid which had not been captured by the carbonate salt added to the positive electrode was reliably captured by the carbonate salt added to the separator, thereby further suppressing the deterioration of the battery materials.

In other words, when the inactivation of hydrofluoric acid is independently enabled in the positive electrode having the carbonate salt, the added amount of the carbonate salt to the separator can be reduced, and the clogging in the separator of Patent Literature 1 and the like can be suppressed.

Therefore, the effective amount of the carbonate salt contributing to the inactivation of hydrofluoric acid without inhibiting the function of the separator can be increased. As a result, the deterioration of the battery materials can be suppressed while improving rapid charge and discharge properties.

It can be seen that even in Example 7 in which the carbonate salt was added only to the separator, the cycle life is longer than that of Comparative Example 2 in which a carbonate salt was not added at all.

However, it can be seen that the life extension effect is not as much as when the carbonate salt was added to the positive electrode. This demonstrates that the addition of the carbonate salt to the separator and the positive electrode enables dramatic extension of cycle life.

It can be seen that when LiBF₄ was used as the electrolyte in Examples 8 and 9, the capacity and cycle life increase. It is considered that the effect by adding the carbonate salt was more significantly expressed, because LiBF₄ is less likely to react with water than LiPF₆, and the generation amount of hydrofluoric acid is small.

Also, as seen from a comparison between Example 10 and Comparative Example 5 both including LTO (lithium titanate) as the negative electrode, the addition or application of the carbonate salt to or on the positive electrode enhances cycle life even when the negative electrode is LTO.

From the above results, the inclusion of the carbonate salt as a scavenger of hydrofluoric acid in the positive electrode active material having a three-dimensional network structure can effectively inactivate generated hydrofluoric acid and enables capture of hydrofluoric acid without liberating hydrofluoric acid in the battery.

Accordingly, a non-aqueous electrolyte storage element capable of drastically suppressing the deterioration of the battery can be provided.

It is noted that, as described above, cycle life is extended even in Example 7 in which the carbonate salt was added only to the separator, when compared to Comparative Example 2 in which a carbonate salt was not added at all.

Also, when the carbon having pores of a three-dimensional network structure was used as the positive electrode active material, the battery can have increased battery capacity and satisfactory rapid charge and discharge properties, compared to known configurations in which such carbon is not used.

Therefore, the non-aqueous electrolyte storage element of Example 7 in which only the separator has the carbonate salt may be obtained for the purpose of extending cycle life while increasing battery capacity and satisfying rapid charge and discharge properties.

Although preferred embodiments of the present invention have been described above, the present invention is not limited to such specific embodiments, which may be variously modified and changed within the scope of the gist of the present invention described in the claims, unless particularly limited in the above-described descriptions.

The effect described in the description of embodiments of the present invention is merely an illustration of the most preferred effect derived from the present invention, and the effect of the present invention is not limited to that described in the embodiments of the present invention.

### Reference Signs List

13 separator
21 carbon as a positive electrode active material and a negative electrode active material
26 non-aqueous electrolytic solution
28 mesopores as pores
29 carbonate salt

### Citation List

### Patent Literature

Patent Literature 1: Japanese Patent Application Laid-Open No. 2001-057240

## Claims

1. A non-aqueous electrolyte storage element comprising:
a positive electrode including a positive electrode active material allowing intercalation or deintercalation of anions;
a negative electrode including a negative electrode active material;
a non-aqueous electrolytic solution; and
a separator disposed between the positive electrode and the negative electrode to hold the non-aqueous electrolytic solution,
wherein the positive electrode active material is carbon having pores of a three-dimensional network structure, and the carbon contains a carbonate salt.

2. The non-aqueous electrolyte storage element according to claim 1, wherein
the carbon contains the carbonate salt at least inside the three-dimensional network structure.

3. The non-aqueous electrolyte storage element according to claim 1, wherein
the carbonate salt is mixed into the carbon.

4. The non-aqueous electrolyte storage element according to claim 1, wherein
at least a portion of a surface of the carbon is covered with the carbonate salt.

5. The non-aqueous electrolyte storage element according to claim 1, wherein
the separator includes the carbonate salt.

6. The non-aqueous electrolyte storage element according to claim 1, wherein
the negative electrode includes a negative electrode active material allowing intercalation and deintercalation of lithium ions.

7. The non-aqueous electrolyte storage element according to claim 1, wherein
the negative electrode active material is any of a carbonaceous material and lithium titanate.

8. The non-aqueous electrolyte storage element according to claim 1, wherein
the non-aqueous electrolytic solution is obtained by dissolving a lithium salt in a non-aqueous solvent.

9. The non-aqueous electrolyte storage element according to claim 8, wherein
the non-aqueous solvent is at least one selected from dimethyl carbonate (DMC), ethylene carbonate (EC), ethyl methyl carbonate (EMC), propylene carbonate (PC), and fluoroethylene carbonate (FEC).

10. The non-aqueous electrolyte storage element according to claim 8, wherein
the lithium salt is any of LiPF₆ and LiBF₄.

11. The non-aqueous electrolyte storage element according to claim 8, wherein
the lithium salt in the non-aqueous solvent has a concentration of 2 mol/L to 4 mol/L.

12. The non-aqueous electrolyte storage element according to claim 1, wherein
the carbon having pores of a three-dimensional network structure has a BET specific surface area of 50 to 2000 m²/g and a pore volume of 0.2 to 2.3 mL/g.
